# EUROPÄISCHE PATENTSCHRIFT

(11) **EP 2 839 917 B1**
(45) Veröffentlichungstag und Bekanntmachung des Hinweises auf die Patenterteilung: **04.10.2017**
(21) Anmeldenummer: 13004151.0
(22) Anmeldetag: 22.08.2013
(51) Int. Cl.: B23H 7/10

(54) **Drahterodiermaschine mit einer Vorrichtung für das Einfädeln der Drahtelektrode**
Wire erosion machine with a device for threading the wire electrode
Machine d'électro-érosion ayant un dispositif pour l'enfilage du fil-électrode

(43) Veröffentlichungstag der Anmeldung: 25.02.2015
(73) Patentinhaber: Agie Charmilles Ltd., 6616 Losone (CH)
(72) Erfinder: Wehrli, Peter, 6612 Ascona (CH); Tobler, Karl, 6673 Maggia (CH)
(74) Vertreter: Fenner, Seraina

(56) Entgegenhaltungen:
- EP-A1- 0 233 297
- DE-A1- 3 236 263
- US-A- 5 006 692

## Beschreibung

Vorliegende Erfindung betrifft eine Drahterodiermaschine mit offener Drahtführung mit einem oberen Drahtführungskopf einem unteren Drahtführungskopf und einer Einfädelvorrichtung zum Einfädeln von Drahtelektroden vom oberen Drahtführungskopf der Drahterodiermaschine durch den Arbeitsraum der Drahterodiermaschine in den unteren Drahtführungskopf der Drahterodiermaschine, wobei die Drahtelektrode aufgrund der Anordnung der oberen Drahtführung zur oberen Stromzuführung schräg aus dem oberen Drahtführungskopf austritt.

Drahterodiermaschinen sind regelmässig mit einer Vorrichtung für das automatische Einfädeln der Drahtelektrode ausgestattet. Eine automatische Einfädelvorrichtung ermöglicht es, unbeaufsichtigt komplette Bearbeitungen durchzuführen. Eine derartige Vorrichtung ist somit von ganz wesentlicher Bedeutung für Drahterodiermaschinen.
Die neue Drahtelektrode wird von einer Drahtvorratsrolle abgezogen, zum und durch den Arbeitsraum transportiert und von dort anschliessend zur Drahtentsorgung befördert. Im Arbeitsraum ist die Drahtelektrode zwischen dem oberen Drahtführungskopf des unteren Drahtführungskopf gespannt und wird sehr genau geführt. Beim Einführen der Drahtelektrode liegt die Schwierigkeit darin, dass im Bereich zwischen dem oberen und dem unteren Drahtführungskopf im Allgemeinen keine Hilfsführungsmittel liegen dürfen, weil dieser Bereich für die Relativbewegungen zwischen Werkstück und Elektrode frei sein muss. Erschwerend kommen dazu, dass u. U. über beträchtliche Höhen von 200mm und mehr eingefädelt werden muss, dass Drahtelektrode unterschiedlicher Dicke eingesetzt werden, dass unterschiedliche Dielektrika eingesetzt werden, dass gelegentlich in den bestehenden Schnittspalt oder in eine Startbohrung eingefädelt werden muss, dass das Werkstück abgesetzte Bereiche aufweisen kann, dass die Drahtelektroden unterschiedliche Steifigkeit aufweisen kann, insbesondere eine bestimmte Drahtkrümmung, oder dass die Drahtelektrode bei sehr kleinem Durchmesser ein fadenähnliches Verhalten aufweist, wobei der Draht an Führungsflächen beispielsweise haften bleibt usw.
Drahterodiermaschinen werden selten über den gesamten Anwendungsbereich eingesetzt. Jedenfalls werden die Anforderungen an die Drahterodiermaschine, wie auch an die automatische Einfädelvorrichtung allgemein stets anspruchsvoller. In bestimmten Anwendungsbereichen besteht das Bedürfnis in stets kleinere Startlöcher einfädeln zu können. Der klassische im Drahtführungskopf aufgebaute Einfädelstrahl aus Wasser oder einem anderen Fluidstösst hier an seine Grenzen. Dieser ist zunehmend ungeeignet für die immer kleiner werdenden Startbohrungen, da immer weniger Platz zwischen Draht und Startbohrung verbleibt. Zur Verbesserung dieser Situation wurden bereits einige Lösungen vorgeschlagen.

Bei einer bekannten Einfädelvorrichtung wird der obere Drahtführungskopf an die Startbohrung auf der Werkstückoberfläche geführt, wobei der Drahtführungskopf im unteren Bereich mit einer Dichtung versehen ist, sodass Drahtführungskopf und Werkstück eine Druckkammer bilden. Beim Einfädelvorgang wird der Draht also zwingend z.B. den Weg durch die Startbohrung nehmen müssen. Dieses Verfahren ist zwar sehr wirksam aber leider nur unter idealen Bedingungen anwendbar. Zum Beispiel scheitert eine derartige Einfädelvorrichtung, wenn an der Peripherie eines Werkstücks oder in einem abgesetzten Bereich eingefädelt werden muss.

Die wesentlichsten Aufgaben der Drahtführungsköpfe bestehen darin, die Drahtelektrode zu führen, die Strompulse auf den Draht zu übertragen und die Spülung des Funkenspalts sicherzustellen. Die hierfür benötigten Mittel sollten möglichst nah am Werkstück liegen, damit die besten Bearbeitungsergebnisse erreicht werden können. Alle weiteren Aufgaben, inklusive die Drahteinfädelung sind untergeordnet. Insofern sind die Verbesserungsmöglichkeiten innerhalb des Drahtführungskopfs beschränkt.

Bei einer weiteren bekannten Einfädelvorrichtung wird der Draht vor dem Einfädeln vor dem oberen Drahtführungskopf gestreckt und getrennt, sodass der Draht gerichtet ist und eine verjüngte Spitze aufweist. Der Draht wird mittels einer geschlossenen Rohrführung durch den oberen Drahtführungskopf bis an das Werkstück geführt. Der Draht kann hier also nicht entweichen und kann sicher eingefädelt werden. Nachteilig an dieser Lösung ist, dass die Drahtführung zwecks Anwendung der Rohrführung geöffnet bzw. bewegt werden muss. Dies bedingt eine spezielle Konstruktion der Drahtführung, was teuer und aufwendig ist, da sehr hohe Anforderungen an die Genauigkeit der Drahtführung gestellt werden.

Bei einer Lösung wie in der EP233297 publiziert, wird eine aus zwei Hälften bestehende externe Düse unmittelbar an den oberen Drahtführungskopf geführt, um einen dünnen Einfädelstrahl zu erzeugen. Der erzielbare Fluidstrahl ist jedoch immer noch relativ dick und zudem eher schwach, da nur sehr wenig Platz für diese geteilte Einfädeldüse zur Verfügung steht.

Die De 32 36 263 A1 offenbart ebenfalls eine automatische Drahtführungsvorrichtung einer Drahtelektroden-Entladungsmaschine.

Die EP 1291110 A1 zeigt eine Drahterodiermaschine mit offener Drahtführung gemäß dem Obergriff des Anspruchs 1.

### Gegenatand der Erfindung

Vorliegende Erfindung will den oben erwähnten Problemen mit einer zuverlässigen, einfachen und günstigen Einfädelvorrichtung Abhilfe schaffen.

Diese Aufgabe wird durch die Einfädelvorrichtung gemäss Anspruch 1 gelöst. Die erfindungsgemässe Idee besteht darin, den Draht beim Einfädeln vom oberen Drahtführungskopf zumindest über eine Teilstrecke zum unteren Drahtführungskopf mechanisch zu führen. Hierzu umfasst die erfindungsgemässe Einfädelvorrichtung eine Hilfsführung für die Drahtelektrode. Diese Hilfsführung ist z.B. wie ein offenes Rohr, d.h. rinnenförmig ausgebildet, damit sie nach dem Einfädeln des Drahtes seitlich wegbewegt werden kann. Die erfindungsgemässe Hilfsführung umfasst einen longitudinal eingebrachten Führungskanal, der z.B. C-förmig oder V-förmig ausgebildet ist, welcher den Draht zumindest teilweise umschliesst. Die erfindungsgemässe Hilfsführung kann z.B. als Halbrohr, also als in Längsrichtung geteiltes Rohr, gestaltet sein. Diese Hilfsführung wird bei Bedarf vor den oberen Drahtführungskopf angeordnet. Damit bildet die erfindungsgemässe Einfädelvorrichtung praktisch eine Verlängerung des Drahtlaufsystems im Zufuhrbereich, d.h. des oberen Drahtführungskopfes.

Die erfindungsgemässe Einfädelvorrichtung wird bevorzugt bei Drahterodiermaschinen mit sog. offener Drahtführung eingesetzt, weil der Draht hier aufgrund der Anordnung der Hauptdrahtführung in Bezug auf die Stromzuführung meist leicht schräg aus dem Drahtführungskopf austritt. Dies ist jedoch nicht einschränkend zu verstehen. Die offene, erfindungsgemässe Hilfsführung wird vorzugsweise derart angeordnet, dass die Spitze der Drahtelektrode vom oberen Drahtführungskopf in den seitlich eingeschwenkten Führungskanal der erfindungsgemässe Hilfsführung hineinfahrt; beim Nachführen des Drahtes gleitet dieser damit zumindest über eine bestimmte Strecke dem longitudinalen Führungskanal der erfindungsgemässen Hilfsführung entlang.

Die erfindungsgemässe Hilfsführung kann unterschiedlich lang ausgebildet sein; gemäss einer Variante "lange Hilfsführung" ist die Hilfsführung derart lang, dass sie im Einfädelbetrieb vom oberen Drahtführungskopf bis in den unteren Drahtführungskopf hineinreicht, d.h. bis in den Bereich der unteren Spüldüse; somit durchquert die Hilfsführung die gesamte Werkstückhöhe, z.B. durch eine vorhandene Einfädelbohrung. Die Länge dieser "langen Hilfsführung" kann im Bereich von etwa 10 bis 50mm liegen, typischerweise weist sie eine Länge von 40 mm auf. Natürlich kann sie grundsätzlich auch länger ausgeführt sein. Die Länge dieser erfindungsgemässen Variante ist eigentlich nur durch den Herstellungsaufwand und durch die sich ergebende geringere Steifigkeit der Hilfsführung begrenzt. Ausserdem tendiert der Draht ab einer bestimmten Länge aus der Hilfsführung zu fallen. Auch wenn dies theoretisch denkbar wäre, kann die Hilfsführung aus praktischen Gründen nicht beliebig dünn hergestellt werden, wodurch die kleinstmögliche Startbohrung begrenzt ist. Der äussere Durchmesser der Hilfsführung liegt vorzugsweise etwa zwischen 0.3 bis 0.8mm, bevorzugt bei 0.5mm. Damit kann bereits ein Grossteil der Drahterodiermaschinen mit der erfindungsgemässen Hilfsführung bestückt werden.

Gemäss einer weiteren denkbaren Variante "kurze Hilfsführung", wird die erfindungsgemässe Hilfsführung kurz ausgebildet, derart dass sie im Einfädelbetrieb nur bis zur Werkstückoberfläche - z.B. an die Einfädelbohrung - reicht. Bei dieser Variante liegt die Länge der Hilfsführung vorzugsweise im Bereich von etwa 5 bis 15mm, bevorzugt weist sie eine Länge von 10 mm auf. Diese Bauform ist einfacher und günstiger in der Herstellung. Ausserdem ist diese Variante robuster, da sie dickwandig gebaut werden kann. Der Durchmesser der Hilfsführung ist bei der kurzen Variante kein begrenzender Faktor, sodass in äusserst kleinen Startbohrungen eingefädelt werden kann (unabhängig vom Aussendurchmesser der Hilfsführung); allerdings ist der Betrieb dieser Variante bei ungünstigen Bedingungen nicht immer vorteilhaft. Zum Beispiel ist es bei dieser kurzen Variante manchmal nicht möglich, mit der Hilfsführung sicher in eine Startbohrung einzufädeln die in einem abgesetzten Bereich des Werkstücks liegt. Dies weil die Drahtelektrode zwischen dem Ablösepunkt am Ausgang des Führungskanals der kurzen Hilfsführung und der Werkstückebene nicht geführt ist und folglich die Gefahr besteht, dass die Drahtelektrodenspitze nicht einfädelt. Je weiter der Ablösepunkt am Ausgang des Führungskanals von der Werkstückebene entfernt ist, desto ungenauer die Führung der Drahtelektrode.

Durch die erfindungsgemässe mechanische Hilfsführung und geeigneter Ausbildung des entsprechend seitlich einschwenkbaren Führungskanals wird die Lage des Drahtes sehr genau definiert. Somit kann der Draht selbst in sehr kleinen Startbohrungen eingefädelt werden, und das Wiedereinfädeln nach einem Drahtriss gelingt selbst bei Startbohrungen mit bestehendem Schnittspalt. Selbst Drähte mit einer gewissen Restkrümmung können eingefädelt werden; eine Einrichtung zum Strecken des Drahtes ist daher meist nicht erforderlich, da die erfindungsgemässe Einfädelvorrichtung relativ unempfindlich auf Drahtdurchbiegung ist. Andererseits ist mit der Variante "lange Hilfsführung" weiterhin auch das Einfädeln bei auf der unteren Seite abgesetzten Werkstücken wesentlich sicherer. Unabhängig von den beiden erwähnten Varianten zeichnet sich die erfindungsgemässe Einfädelvorrichtung grundsätzlich durch eine erhöhte Zuverlässigkeit aus, und dies selbst bei schwierigen Einfädelbedingungen.

Die erfindungsgemässe Einfädelvorrichtung ist ausserhalb des eigentlichen Drahtführungskopf angeordnet und beweglich, vorzugsweise schwenkbar, ausgeführt. Die Hilfsführung findet ihren Einsatz bei Bedarf, regelmässig oder auch nur selektiv (beispielsweise bei schwierigen Einfädelbedingungen). Vorzugsweise ist die erfindungsgemässe Hilfsführung koaxial vor dem oberen Drahtführungskopf positionierbar.

Die korrekte Gestaltung der Hilfsführung ist ganz wesentlich für den zuverlässigen Betrieb der erfindungsgemässen Einfädelvorrichtung. Zur Fertigung dieser Hilfsführung ist z.B. ein Drahterosionsverfahren mit Feindraht geeignet. Der Führungskanal ist vorzugsweise geschliffen ausgestaltet.

Die erfindungsgemässe offene Hilfsführung ist bevorzugt so gestaltet, dass sich damit Drähte mit verschiedenen Drahtdurchmessern einfädeln lassen, ohne dass dafür Teile gewechselt werden müssten. Die Abmessungen der Hilfsführung, insbesondere Aussendurchmesser, Durchmesser des Führungskanals und Länge sind in einem bestimmten Masse auf den Durchmesser der Drahtelektrode und auf den Durchmesser der Startbohrung angepasst.

Die erfindungsgemässe Einfädelvorrichtung ist wie erwähnt beweglich gestaltet, d.h. sie kann kontrolliert von einer Ruhelage in eine Arbeitsposition und zurück bewegt - z.B. eingeschwenkt -werden. Die Ruhelage ist eine Position, in welcher das Werkstück ohne Einschränkung bzw. Behinderung durch die Einfädelvorrichtung bearbeitet werden kann. Die gesamte Einfädelvorrichtung befindet sich hierbei vorzugsweise oberhalb der Werkstückebene. Die Arbeitsposition ist eine eindeutige Position der Einfädelvorrichtung gegenüber dem Drahtführungskopf, die vorzugsweise durch einen mechanischen Anschlag definiert ist, und in der die Hilfsführung bevorzugt exakt senkrecht zur Werkstückebene liegt. Die Bewegung zwischen Ruhelage und Arbeitsposition erfolgt vorzugsweise durch eine einfache einachsige Bewegung, z.B. einer Schwenkbewegung, die beispielsweise mittels eines Zahnrades, eines Kniehebel oder anderer Übertragungsmitteln erzielt wird. Zur Betätigung der Einfädelvorrichtung genügt ein einfaches Antriebsorgan, z.B. ein pneumatischer Zylinder mit Federrückstellung.

Die erfindungsgemässe Einfädelvorrichtung bietet eine universelle Lösung an, die für verschiedene Drahtführungsköpfe verwendet werden kann. Sie kann auch nachträglich auf bereits bestehenden Maschinen eingebaut werden, was sehr vorteilhaft ist. Bestehende Drahtführungsköpfe müssen hierzu nicht unbedingt neu gestaltet werden. Damit entfällt der Aufwand zur Integration einer erweiterten Einfädelfunktion.

Im Folgenden wird die erfindungsgemässe Einfädelvorrichtung anhand von schematischen Figuren dargestellt und erläutert. Es soll aber ausdrücklich darauf hingewiesen werden, dass sich die Erfindung bzw. der Erfindungsgedanke nicht auf die in diesen Beispielen gezeigten Ausführungsformen beschränkt. Die Figuren zeigen:
- Figur 1: eine erfindungsgemässe Einfädelvorrichtung während dem Einfädeln in eine Startbohrung;
- Figur 2: die Einfädelvorrichtung von Figur 1 nach dem Einfädeln in eine Startbohrung;
- Figur 3: die Einfädelvorrichtung von Figur 1 nach dem Einfädeln in einen Schnittspalt;
- Figur 4: die Einfädelvorrichtung von Figur 1 nach dem Einfädeln in einem abgesetzten Werkstück;
- Figur 5: eine Einfädelvorrichtung in Ruhelage, vor dem Einfädeln in eine Startbohrung;
- Figur 6: eine Einfädelvorrichtung in Ruhelage, nach dem Einfädeln in eine Startbohrung;
- Figur 7: eine Einfädelvorrichtung in Arbeitsposition;
- Figur 8: eine Einfädelvorrichtung in Ruhelage;
- Figur 9a, 9b: eine Einfädelvorrichtung mit einer langen Version der Hilfsführung, und eine Schnittzeichnung durch eine Starbohrung mit der Hilfsführung und Drahtelektrode;
- Figur 10a, 10b: eine Einfädelvorrichtung mit einer kurzen Version der Hilfsführung, und eine Detailansicht davon.

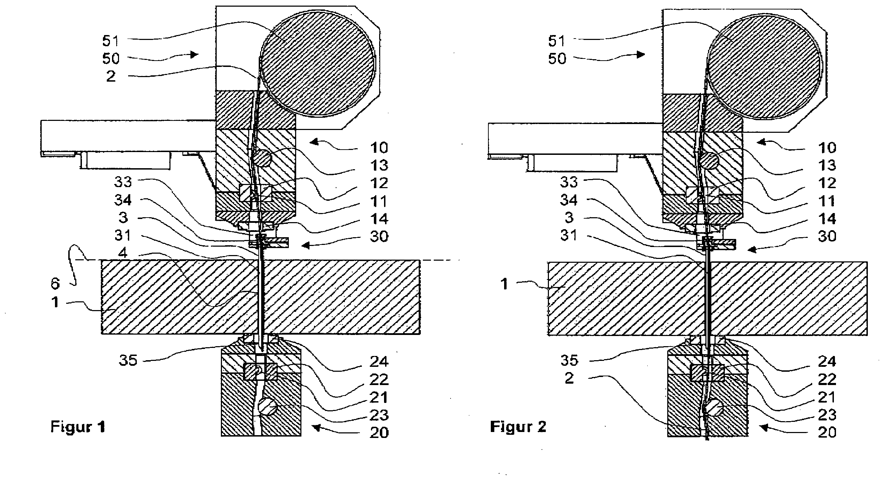

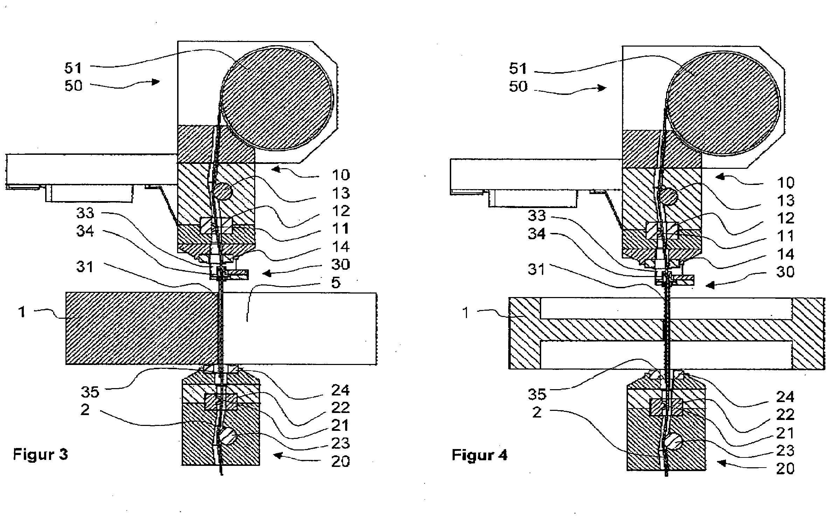

Die Figuren 1 und 2 zeigen die erfindungsgemässe Einfädelvorrichtung 30 während dem Einfädeln der Drahtelektrode in einer kleinen Startbohrung 4. Die Figuren 3 und 4 zeigen weitere erschwerte Einfädelbedingungen. Figur 3 zeigt die Einfädelvorrichtung 30 beim Einfädeln in einen Schnittspalt 5 und Figur 4 zeigt die Einfädelvorrichtung 30 beim Einfädeln in einem beidseitig abgesetzten Werkstück. Die Figuren 1 bis 4 zeigen die erfindungsgemässe Einfädelvorrichtung 30 in ihrer Arbeitsposition, wobei die Hilfsführung 31 senkrecht zur Werkstückebene 6 liegt bzw. fluchtend mit der Startbohrung angeordnet wird.
Die Hilfsführung ist bei den Figuren 1 bis 9b relativ lang gestaltet entsprechend der Version "lange Hilfsführung", sodass sie in Arbeitsposition bei der dargestellten Werkstückhöhe durch das Werkstück bis an die untere Spüldüse des unteren Drahtführungskopfes hineinreicht. Auf diese Weise ist erfindungsgemäss der sichere Transport der Drahtelektrode durch das Werkstück sichergestellt.

Der allgemeine Aufbau der Drahtführungsköpfe wird nun anhand der Figur 1 kurz erläutert. Die Drahterodiermaschine umfasst einen oberen und einen unteren Drahtführungskopf 10,20. Jeder Drahtführungskopf enthält mindestens: eine Stromzuführung 13,23, eine Drahtführung 11,21 und eine Spüldüse 14,24. Die Drahtelektrode 2 läuft über eine nicht dargestellte Zuführungsstrecke des Drahtantriebs von oben her zum oberen Drahtführungskopf 10, führt über einen Arbeitsraum, wobei der Arbeitsraum durch den oberen und den unteren Drahtführungskopf begrenzt ist, erreicht den unteren Drahtführungskopf 20 und wird von dort zur Drahtentsorgung abgezogen . Während der drahterosiven Bearbeitung des Werkstücks 1 läuft der Draht zwischen der oberen Drahtführung 11 und der unteren Drahtführung 21 frei gespannt, mit einer bestimmten Drahtspannung und Drahtlaufgeschwindigkeit ab. Vor der Aufnahme bzw. Wiederaufnahme der drahterosiven Bearbeitung wird die Drahtelektrode 2 im Arbeitsraum durch das Werkstück oder neben dem Werkstück eingefädelt. Die Drahtelektrodenspitze 3 liegt z.B. im Bereich des oberen Drahtführungskopfes bereit. Hier sind nämlich i.d.R. Mittel zum automatischen Schneiden der Drahtelektrode untergebracht (nicht dargestellt).

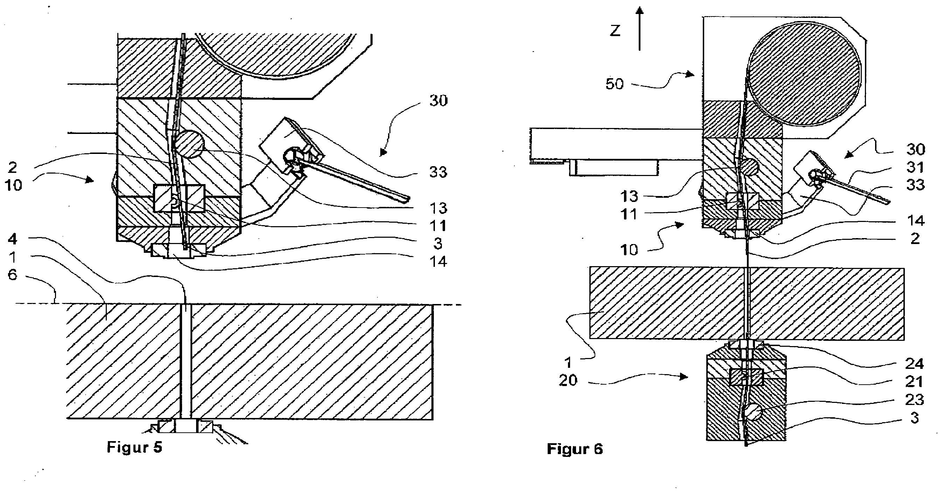

Nachfolgend wird der Ablauf der Drahteinfädelung bei Verwendung der erfindungsgemässen Einfädelvorrichtung 30 am Beispiel einer langen Hilfsführung 31 erläutert (siehe Figur 1). Die Drahtelektrodenspitze befindet sich hierbei bereits im Bereich der Spüldüse 14 am oberen Drahtführungskopf 10 (siehe Figur 1). Die Einfädelvorrichtung 30 befindet sich bei Nichtverwendung in einer Ruhelage, z.B. wie in Figur 5 dargestellt aus dem Arbeitsbereich weggeschwenkt. Für die Verwendung der Einfädelvorrichtung wird im dargestellten Beispiel zunächst die Z-Achse der Drahterodiermaschine um etwas mehr als die Länge der Hilfsführung angehoben, derart dass die Hilfsführung 31 ohne Berührung mit dem Werkstück 1 vor den oberen Drahtführungskopf positioniert bzw. eingeschwenkt werden kann. Die Einfädelvorrichtung 30 wird z.B. durch eine Schwenkbewegung in die Arbeitsposition vor den oberen Drahtführungskopf 10 gebracht, z.B. bis zu einem Anschlag. Dies derart, dass die Hilfsführung 31 senkrecht gegenüber der Werkstückebene 6 liegt bzw. derart dass die Hilfsführung 31 fluchtend mit der Startbohrung zu liegen kommt. Die Hauptbewegungsachsen der Drahterodiermaschine (X/Y, U/V; nicht dargestellt) werden derart verstellt, dass sich die Drahtführungsköpfe an der gewünschten Stelle gegenüber dem Werkstück 1, z.B. über einer Startbohrung 4 befinden. Beim Einsatz der langen Hilfsführung 31 wird nun die Z-Achse nach unten verstellt, sodass die Hilfsführung zumindest teilweise durch die Startbohrung 4 hindurchführt. Ist das Werkstück 1 niedriger als die Länge der Hilfsführung 31, so wird die Z-Achse z.B. so weit nach unten verstellt, dass der Ausgang des Führungskanals 35der Hilfsführung 31 die untere Spüldüse 24 im unteren Drahtführungskopf 20 erreicht. Die Drahtelektrode 2 wird nun durch Aktivierung des Drahtantriebes und der Spülung (nicht dargestellt) vorgetrieben, sodass sie in die Hilfsführung 31 gelangt und damit durch die Startbohrung4 geführt wird. Die Drahtelektrode wird im unteren Drahtführungskopf 20 durch Unterdruckbildung angezogen und zu einem Drahtabzug befördert. Nach dem Einfädeln wird die Z-Achse wieder angehoben, sodass die Hilfsführung 31 der Einfädelvorrichtung, wie in Figur 6 gezeigt, in eine Ruhelage wegbewegt oder weggeschwenkt werden kann. Die Hilfsführung 31 der erfindungsgemässen Einfädelvorrichtung 30 kann insbesondere deshalb ohne weiteres vom nun gespannten Draht entfernt werden, weil die Hilfsführung 31 offen ausgebildet ist und den Draht nur während dem Einfädeln teilweise umschliesst.
Ist die erfindungsgemässen Einfädelvorrichtung 30 weggeschwenkt, wird die Z-Achse wieder nach unten verstellt, derart dass die obere Spüldüse 14 auf der Höhe der Werkstückebene 6 zu liegen kommt. Die drahterosive Bearbeitung kann nun fortgesetzt werden.
Damit ist der Arbeitsraum lediglich während des Einfädelvorganges durch die bewegliche, erfindungsgemässe Einfädelvorrichtung besetzt (Arbeitsposition). Während der Bearbeitung des Werkstückes bleibt die wichtige Zone zwischen den Drahtführungsköpfen also völlig frei.

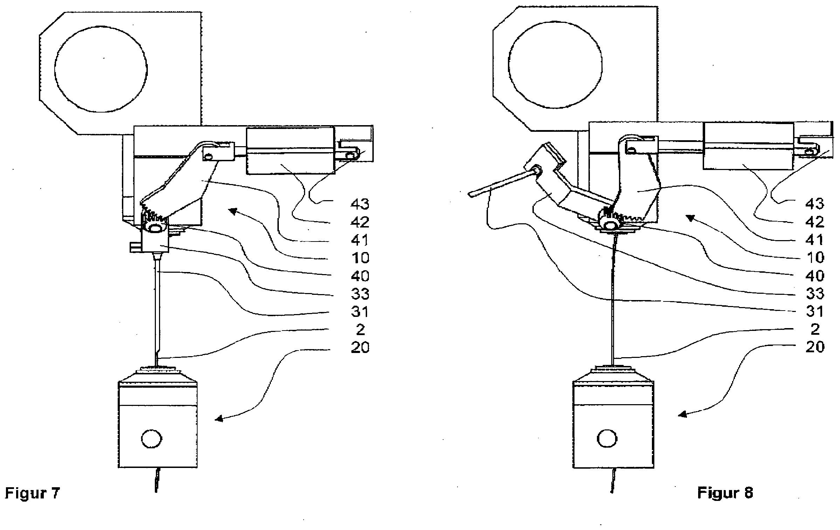

Die Figuren 7 und 8 zeigen die erfindungsgemässe Einfädelvorrichtung 30 der Einfachheit halber während dem Einfädeln einer Drahtelektrode im freien Arbeitsraum. Die Figuren 7 und 8 zeigen Ansichten der Querschnittdarstellungen in den Figuren 5 und 6 von der gegenüberliegenden Seite. Hier ist beispielhaft ein möglicher Aufbau eines Schwenkantriebs für die erfindungsgemässe Einfädelvorrichtung dargestellt. Die Hilfsführung 31 ist in dieser Ausführungsform an einem Führungssupport 33 montiert, wobei der Führungssupport 33 unterschiedlich gestaltete Hilfsführungen 31 aufnehmen kann. Am Führungssupport 33 fest montiert ist ein Zahnrad 40, das mit einem drehbaren Zahnrad-Schwenkhebel 41 zusammenwirkt. Der Zahnrad-Schwenkhebel 41 wird durch einen Zylinder 42 bewegt, wodurch die Einfädelvorrichtung 30 von einer Ruhelage in eine Arbeitsposition und umgekehrt geschwenkt werden kann.

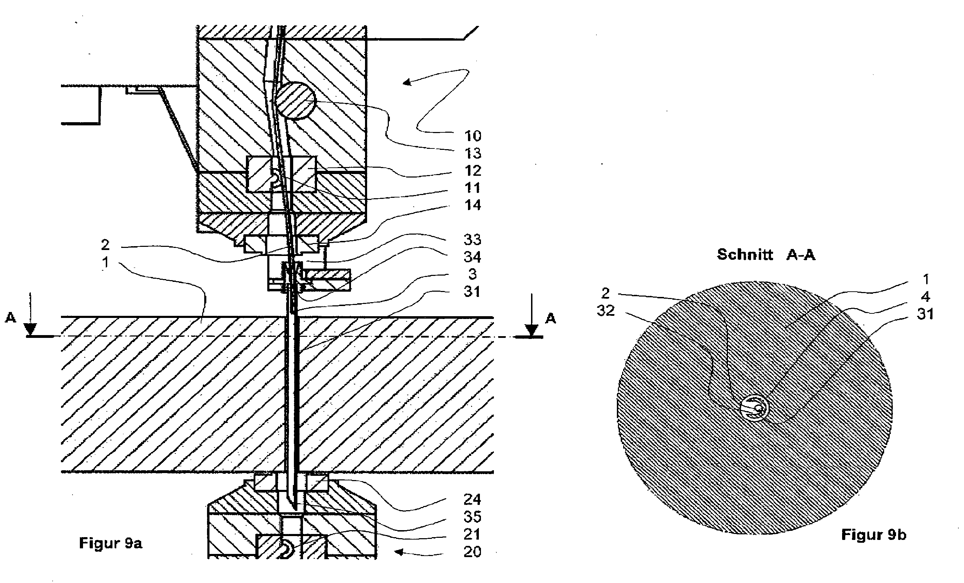

Die Figuren 9a und 9b zeigen Details einer Einfädelvorrichtung 30 in der Variante mit langer Hilfsführung 31. Die Hilfsführung 31 ist wie in den beiden vorangehenden Figuren an einem Führungssupport 33 montiert. Der Führungssupport 33 und/oder die Hilfsführung 31 selbst umfassen einen Eingang 34 zum Führungskanal 32, durch den zunächst die Drahtelektrodenspitze 3 in den Führungskanal 32 der erfindungsgemässen Hilfsführung 31 geführt wird. Der Eingang 34des Führungskanals 32 an der Hilfsführung 31 ist vorzugsweise so ausgebildet, dass der Querschnitt in Drahtlaufrichtung abnimmt, d.h. halbtrichterförmig. Beim Einfädeln gleitet die Drahtelektrode 2 den Führungskanal 32 der Hilfsführung 31 entlang und erreicht den Ausgang 35 des Führungskanals 32. Dieser ist vorzugsweise derart gestaltet, dass die Drahtelektrode 2 am Ablösepunkt vom Führungskanals 32 eine eindeutige Position einnimmt. Figur 9b zeigt einen Schnitt A-A durch das Werkstück von Figur 9a, woraus eine mögliche Ausbildung des Führungskanals ersichtlich ist. Der Führungskanal 32 ist hier C-förmig bzw. rinnenförmig ausgebildet; diese Geometrie kann mit vertretbarem Aufwand erzeugt werden. Selbstverständlich sind weitere Geometrien denkbar und möglich, z.B. eine V- förmige Führungskanalgeometrie. Letztere hat den Vorzug, dass die Position der Drahtelektrode 2 unabhängig des Durchmessers besser definiert ist als im vorangehenden Beispiel (v.a. am vorerwähnten Ablösepunkt). Wie in den Figuren 9a und 9b dargestellt, ist die äussere Fläche der Hilfsführung 31 zumindest teilweise zylindrisch gestaltet.

In einer weiteren Variante der Erfindung kann die Einfädelvorrichtung 30 bei Bedarf mit Sensoren ausgestattet sein (nicht abgebildet), z.B. mit einem Dehnmessstreifen (DMS). Damit können z.B. Sicherheitsfunktionen implementiert werden, sodass die Hilfsführung 31 vor Beschädigung geschützt werden kann. Es könnte z.B. vorkommen, dass an der vorgesehenen Stelle eine Einfädelbohrung fehlt oder dass die Position der Einfädelbohrung falsch programmiert wurde, sodass die Einfädelvorrichtung 30 mit der Werkstückoberfläche kollidieren würde. Dank eines Sensors kann die Berührung der Hilfsführung mit dem Werkstück frühzeitig festgestellt werden, noch bevor es zu einer Beschädigung der Einfädelvorrichtung kommt.
Die genaue Position der erfindungsgemässen Hilfsführung bzw. von dessen Führungskanal oder Drahtspitze 3 kann z.B. durch einen Anfahrzyklus mit elektrischem Antasten oder Ähnlichem einmalig oder regelmässig durchgeführt werden. Hierdurch kann die Zuverlässigkeit der erfindungsgemässen Einfädelvorrichtung weiter erhöht werden, insbesondere beim Einfädeln in sehr kleinen Einfädel- bzw. Startbohrungen.

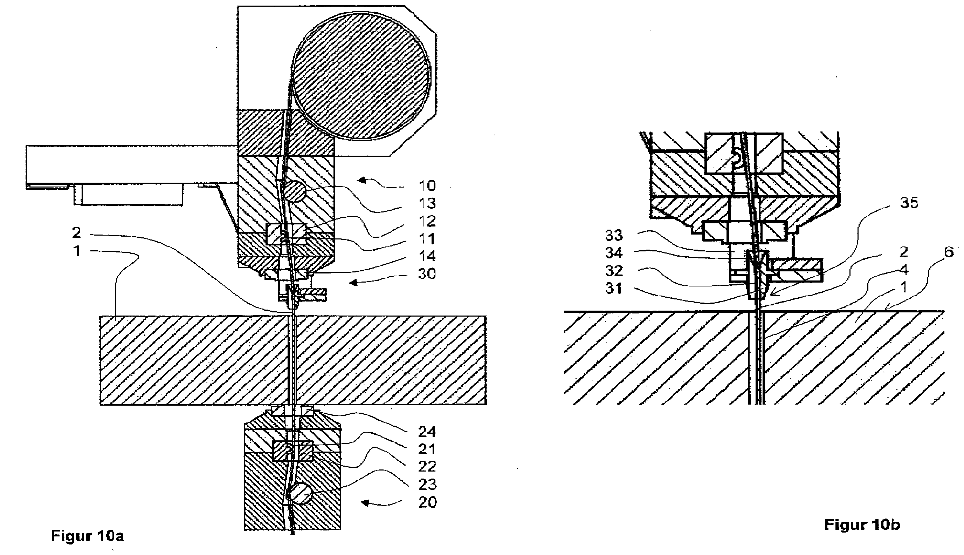

Die Figuren 10a und 10b zeigen Details einer Einfädelvorrichtung 30 in der Variante mit "kurzer Hilfsführung" 31. Bei dieser Ausführungsform dringt die Hilfsführung 31 nicht in das Werkstück - z.B. in eine Einfädelbohrung 4 oder einem Schnittspalt 5 - hinein; sie verkürzt jedoch die Strecke zur Oberfläche des Werkstücks 1 auf der die Drahtelektrode 2 ohne weitere mechanische Führung vorgeschoben wird auf ein Minimum. So kann der Abstand zwischen dem Ablösepunkt am Ausgang des Führungskanals 35 einer kurzen Hilfsführung 31 und der Werkstückebene 6 auf wenige Zehntel mm reduziert werden. Bei entsprechender Vorsicht kann die kurze Hilfsführung sogar in Kontakt zur Oberfläche des Werkstücks 1 gebracht werden. Hierdurch ist eine sehr gute Treffsicherheit der Einfädelbohrungen zu erreichen. Die Hilfsführung kann in dieser Variante auch verhältnismässig dickwandig und daher sehr robust ausgeführt sein.

Selbstverständlich kann zusätzlich zur erfindungsgemässen Einfädelvorrichtung eine konventionelle Einfädelvorrichtung zum Einsatz kommen, z.B. eine Einfädelvorrichtung, welche mittels einer im oberen Drahtführungskopf integrierten Düse einen Einfädelstrahl erzeugt.

Die erfindungsgemässe Einfädelvorrichtung 30 für Drahterodiermaschinen zum Einfädeln von Drahtelektroden 2 vom oberen Drahtführungskopf 10 der Drahterodiermaschine durch den Arbeitsraum der Drahterodiermaschine in den unteren Drahtführungskopf 20 der Drahterodiermaschine, lässt sich dadurch spezifizieren, dass die Einfädelvorrichtung 30 eine zwischen dem oberen und dem unteren Drahtführungskopf 10, 20 positionierbare Hilfsführung 31 besitzt, welche für die eigentliche Führung der einzufädelnden Drahtelektrode 2 (beziehungsweise von dessen Drahtelektrodenspitze 3) einen nutförmig-offen ausgestalteten Führungskanal 32 besitzt. Dank des erfindungsgemässen nutförmig-offen ausgestalteten Führungskanals 32 ist es möglich, dass die Hilfsführung 31 nach erfolgreich erfolgter Einfädelung einfach seitlich weggeschwenkt oder wegbewegt werden kann, ohne dass die Hilfsführung wie beim Stand der Technik (vergleiche EP 233 197) speziell geöffnet werden muss.
Die Hilfsführung 31 der erfindungsgemässen Einfädelvorrichtung (30) kann entsprechend einteilig ausgeführt sein.

Die erfindungsgemässe Hilfsführung gewährt damit nicht nur einen zuverlässigen Einfädelvorgang, sondern bietet damit auch eine vergleichsweise einfache und damit kostengünstige Konstruktion für eine Einfädelvorrichtung.
Fährt die erfindungsgemässe Hilfsführung 31 in das Werkstück 1 allenfalls hinein, dann muss die Hilfsführung 31 vor dem Wegschwenken nur noch aus der Startbohrung 4 oder dem Schnittspalt 5 des Werkstückes 1 fluchtend zur Drahtführungsrichtung - welche ja durch den oberen und unteren Drahtführungskopf 10, 20 resp. Drahtführung 11 und 21 definiert wird - bewegt werden.
Die Hilfsführung 31 kann eine Länge aufweisen die ausreicht, um die Drahtelektrode 2 bzw. deren Drahtelektrodenspitze 3 vom oberen Drahtführungskopf 10 bis in oder auch nur unmittelbar vor dem unteren Drahtführungskopf 20 zu führen. Dabei kann die Hilfsführung 31 derart lang sein, dass sie durch das Werkstück 1 bzw. dessen Startbohrung oder Schnittspalt reicht (vergleiche Figuren 1 bis 9a). In einer bevorzugten Ausführungsform kann die Hilfsführung 31 eine Länge aufweisen, um die Drahtelektrode 2 oder deren Drahtelektrodenspitze 3 vom oberen Drahtführungskopf 10 bis an die Oberfläche eines zu bearbeitenden Werkstückes 1 zu führen. Selbstverständlich ist das Werkstück hierbei vorzugweise mit einer Startbohrung 4 vorzubereiten.
In einer weiteren bevorzugten Ausführungsform wird die Hilfsführung 31 aus einer Ruhelage ausserhalb des Arbeitsraumes, beispielsweise von einer Seite des oberen Drahtführungskopfes in den Arbeitsraum zwischen dem oberen und dem unteren Drahtführungskopf 10, 20 hineinbewegt, z.B. geschwenkt. Hierbei ist die Hilfsführung 31 besonders bevorzugt auch fluchtend zur Drahtführungsrichtung, d.h. in Drahtrichtung, bewegbar. Damit kann die erfindungsgemässe Hilfsführung 31 in eine Startbohrung 4 oder einen Schnittspalt 5 eines Werkstückes 1 abgesenkt werden (ev. bis in den unteren Drahtführungskopf hinein) oder die Hilfsführung kann unmittelbar über der Werkstückoberfläche positioniert werden. Vorzugsweise ist die Hilfsführung 31 oder wenigstens deren Führungskanal 32 derart ausgerichtet, dass die zu führende Drahtelektrode 2 oder deren Drahtelektrodenspitze 3 senkrecht zur Werkstückoberfläche geführt wird. Selbstverständlich wäre es theoretisch aber auch denkbar, dass diese Drahtführung mit einem beliebig bestimmbaren Winkel zur Werkstückoberfläche geführt wird.

Die erfindungsgemässe Hilfsführung 31 kann einen äusseren Durchmesser von 0.15 bis 1 mm, 0.3 bis 0.8 mm oder 0.5mm aufweisen.
Ebenso sind Hilfsführungen 31 mit einer Länge von 2 bis 100 mm, 10 bis 50 mm,5 bis 15 mm, bevorzugt 10 oder 40 mm denkbar.
In einer weiteren Variante der Erfindungsidee ist der Querschnitt des Führungskanals 32 in der Hilfsführung 31 zumindest teilweise V-förmig, U-förmig oder kreisförmig ausgeführt. Andererseits kann der äussere Querschnitt der Hilfsführung 31 zumindest teilweise zylindrisch gestaltet sein. Ebenso kann der Führungskanal 32 einen konstanten Querschnitt aufweisen. Die Hilfsführung31 kann ebenfalls mit einem trichterförmigen Eingangsstück für den Führungskanal 32 versehen sein (vgl. Figuren 10a und 10b).

### Bezugszeichenliste

- 1: Werkstück
- 2: Drahtelektrode, bzw. Draht
- 3: Drahtelektrodenspitze
- 4: Startbohrung
- 5: Schnittspalt
- 6: Werkstückebene
- 10: Oberer Drahtführungskopf
- 11: Obere Drahtführung
- 12: Oberer Drahtführungssupport
- 13: Obere Stromzuführung
- 14: Obere Spüldüse
- 20: Unterer Drahtführungskopf
- 21: Untere Drahtführung
- 22: Unterer Drahtführungssupport
- 23: Untere Stromzuführung
- 24: Untere Spüldüse
- 30: Einfädelvorrichtung
- 31: Hilfsführung
- 32: Führungskanal
- 33: Support zu Hüfsführung
- 34: Eingang des Führungskanals
- 35: Ausgang des Führungskanals
- 40: Zahnrad
- 41: Zahnrad-Schwenkhebel
- 42: Zylinder
- 43: Zylindersupport
- 50: Drahtbremse
- 51: Drahtbremsrolle

## Patentansprüche

1. Drahterodiermaschine mit offener Drahtführung mit einem oberen Drahtführungskopf (10) einem unteren Drahtführungskopf (20) und einer Einfädelvorrichtung (30) zum Einfädeln von Drahtelektroden (2) vom oberen Drahtführungskopf (10) der Drahterodiermaschine durch den Arbeitsraum der Drahterodiermaschine in den unteren Drahtführungskopf (20) der Drahterodiermaschine, wobei die Drahtelektrode (2) aufgrund der Anordnung der oberen Drahtführung (11) zur oberen Stromzuführung (13) schräg aus dem oberen Drahtführungskopf (10) austritt,
**dadurch gekennzeichnet, dass**
die Einfädelvorrichtung (30) eine zwischen dem oberen und dem unteren Drahtführungskopf (10, 20) positionierbare Hilfsführung (31) besitzt, wobei die Hilfsführung (31) für die Führung der schräg aus dem oberen Drahtführungskopf (10) austretenden und einzufädelnden Drahtelektrode (2) oder deren Drahtelektrodenspitze (3) einen nutförmig offen ausgestalteten Führungskanal (32) aufweist.

2. Drahterodiermaschine mit offener Drahtführung mit einem oberen Drahtführungskopf (10) einem unteren Drahtführungskopf (20) und einer Einfädelvorrichtung (30) zum Einfädeln von Drahtelektroden (2) gemäss Anspruch 1, **dadurch gekennzeichnet, dass** der Führungskanal (32) der Hilfsführung (31) einteilig ausgeführt ist.

3. Drahterodiermaschine mit offener Drahtführung mit einem oberen Drahtführungskopf (10) einem unteren Drahtführungskopf (20) und einer Einfädelvorrichtung (30) zum Einfädeln von Drahtelektroden (2) gemäss Anspruch 1 oder 2, **dadurch gekennzeichnet, dass** die Hilfsführung (31) eine Länge aufweist, die bis vor oder in den unteren Drahtführungskopf (20) reicht.

4. Drahterodiermaschine mit offener Drahtführung mit einem oberen Drahtführungskopf (10) einem unteren Drahtführungskopf (20) und einer Einfädelvorrichtung (30) zum Einfädeln von Drahtelektroden (2) gemäss Anspruch 1 oder 2, **dadurch gekennzeichnet, dass** die Hilfsführung (31) eine Länge aufweist, die kürzer als der Arbeitsabstand zwischen oberem und unterem Drahtführungskopf (10, 20) ist, um bis an die Oberfläche eines zu bearbeitenden Werkstückes (1) zu reichen, welches vorzugweise mit einer Startbohrung (4) vorbereitet ist.

5. Drahterodiermaschine mit offener Drahtführung mit einem oberen Drahtführungskopf (10) einem unteren Drahtführungskopf (20) und einer Einfädelvorrichtung (30) zum Einfädeln von Drahtelektroden (2) gemäss Anspruch 1 oder 2, **dadurch gekennzeichnet, dass** die Hilfsführung (31) eine Länge aufweist um die Drahtelektrode (2) oder deren Drahtelektrodenspitze (3) vom Ausgang des oberen Drahtführungskopfes (10) bis an die Oberfläche eines Werkstückes (1) zu führen, welches vorzugweise mit einer Startbohrung (4) vorbereitet ist.

6. Drahterodiermaschine mit offener Drahtführung mit einem oberen Drahtführungskopf (10) einem unteren Drahtführungskopf (20) und einer Einfädelvorrichtung (30) zum Einfädeln von Drahtelektroden (2) gemäss einem der vorangehenden Ansprüche, **dadurch gekennzeichnet, dass** die Hilfsführung (31) aus einer Ruhelage ausserhalb des Arbeitsraumes in den Arbeitsraum zwischen dem oberen und dem unteren Drahtführungskopf (10, 20) bewegbar, vorzugsweise schwenkbar, ist,
wobei die Hilfsführung (31) besonders bevorzugt auch fluchtend zur Drahtführungsrichtung bewegbar ist, um so die Hilfsführung (31) in eine Startbohrung (4) oder einen Schnittspalt (5) einer Werkstückes (1) absenken zu können oder um die Hilfsführung über der Werkstückoberfläche zu positionieren.

7. Drahterodiermaschine mit offener Drahtführung mit einem oberen Drahtführungskopf (10) einem unteren Drahtführungskopf (20) und einer Einfädelvorrichtung (30) zum Einfädeln von Drahtelektroden (2) gemäss einem der vorangehenden Ansprüche, **dadurch gekennzeichnet, dass** der Führungskanal (32) der Hilfsführung (31) die Drahtelektrode (2) oder deren Drahtelektrodenspitze (3) in eine Richtung senkrecht zur Werkstückoberfläche führt.

8. Drahterodiermaschine mit offener Drahtführung mit einem oberen Drahtführungskopf (10) einem unteren Drahtführungskopf (20) und einer Einfädelvorrichtung (30) zum Einfädeln von Drahtelektroden (2) gemäss einem der vorangehenden Ansprüche, **dadurch gekennzeichnet, dass** die Hilfsführung (31) einen äusseren Durchmesser von 0.15 bis 1 mm, vorzugsweise 0.3 bis 0.8 mm, besonders bevorzugt 0.5mm aufweist.

9. Drahterodiermaschine mit offener Drahtführung mit einem oberen Drahtführungskopf (10) einem unteren Drahtführungskopf (20) und einer Einfädelvorrichtung (30) zum Einfädeln von Drahtelektroden (2) gemäss einem der vorangehenden Ansprüche, **dadurch gekennzeichnet, dass** die Hilfsführung (31) eine Länge von 2 bis 100 mm, vorzugsweise 10 bis 50 mm, bevorzugt 5 bis 15 mm, besonders bevorzugt 10 oder 40 mm aufweist.

10. Drahterodiermaschine mit offener Drahtführung mit einem oberen Drahtführungskopf (10) einem unteren Drahtführungskopf (20) und einer Einfädelvorrichtung (30) zum Einfädeln von Drahtelektroden (2) gemäss einem der vorangehenden Ansprüche, **dadurch gekennzeichnet, dass** der Querschnitt des Führungskanals (32) der Hilfsführung (31)zumindest teilweise V-förmig, U-förmig oder kreisförmig ist.

11. Drahterodiermaschine mit offener Drahtführung mit einem oberen Drahtführungskopf (10) einem unteren Drahtführungskopf (20) und einer Einfädelvorrichtung (30) zum Einfädeln von Drahtelektroden (2) gemäss einem der vorangehenden Ansprüche, **dadurch gekennzeichnet, dass** der äussere Querschnitt der Hilfsführung (31)zumindest teilweise zylindrisch gestaltet ist.

12. Drahterodiermaschine mit offener Drahtführung mit einem oberen Drahtführungskopf (10) einem unteren Drahtführungskopf (20) und einer Einfädelvorrichtung (30) zum Einfädeln von Drahtelektroden (2) nach einem der vorangehenden Ansprüche, **dadurch gekennzeichnet, dass** der Führungskanal (32)einen konstanten Querschnitt aufweist.

13. Drahterodiermaschine mit offener Drahtführung mit einem oberen Drahtführungskopf (10) einem unteren Drahtführungskopf (20) und einer Einfädelvorrichtung (30) zum Einfädeln von Drahtelektroden (2) nach einem der vorangehenden Ansprüche, **dadurch gekennzeichnet, dass** die Hilfsführung (31) mit einem trichterförmigen Eingangsstück für den Führungskanal (32) versehen ist.

## Claims

1. Wire erosion machine with open wire guidance having an upper wire guide head (10), a lower wire guide head (20) and a threading device (30) for threading wire electrodes (2) from the upper wire guide head (10) of the wire erosion machine through the working space of the wire erosion machine into the lower wire guide head (20) of the wire erosion machine, the wire electrodes (2) emerging obliquely from the upper wire guide head (10) as a result of the arrangement of the upper wire guide (11) relative to the upper power supply (13),
**characterized in that**
the threading device (30) has an auxiliary guide (31) that can be positioned between the upper and lower wire guide head (10, 20), wherein the auxiliary guide (31) for the guidance of the wire electrode (2) emerging obliquely from the upper wire guide head (10) and to be threaded, or its wire electrode tip (3), has a guide channel (32) that is configured so as to be open in the form of a groove.

2. Wire erosion machine with open wire guidance having an upper wire guide head (10), a lower wire guide head (20) and a threading device (30) for threading wire electrodes (2) according to Claim 1, **characterized in that** the guide channel (32) of the auxiliary guide (31) is designed as one part.

3. Wire erosion machine with open wire guidance having an upper wire guide head (10), a lower wire guide head (20) and a threading device (30) for threading wire electrodes (2) according to Claim 1 or 2, **characterized in that** the auxiliary guide (31) has a length which reaches as far as before or in the lower wire guide head (20).

4. Wire erosion machine with open wire guidance having an upper wire guide head (10), a lower wire guide head (20) and a threading device (30) for threading wire electrodes (2) according to Claim 1 or 2, **characterized in that** the auxiliary guide (31) has a length which is shorter than the working distance between the upper and lower wire guide head (10, 20), in order to reach as far as the surface of a workpiece (1) to be machined, which is preferably prepared with a starting hole (4).

5. Wire erosion machine with open wire guidance having an upper wire guide head (10), a lower wire guide head (20) and a threading device (30) for threading wire electrodes (2) according to Claim 1 or 2, **characterized in that** the auxiliary guide (31) has a length in order to guide the wire electrode (2) or its wire electrode tip (3) from the outlet of the upper wire guide head (10) as far as the surface of a workpiece (1), which is preferably prepared with a starting hole (4).

6. Wire erosion machine with open wire guidance having an upper wire guide head (10), a lower wire guide head (20) and a threading device (30) for threading wire electrodes (2) according to one of the preceding claims, **characterized in that** the auxiliary guide (31) can be moved, preferably pivoted, from a rest position outside the working space into the working space between the upper and the lower wire guide head (10, 20),
wherein the auxiliary guide (31) can particularly preferably also be moved in alignment with the wire guide direction, in order in this way to be able to lower the auxiliary guide (31) into a starting hole (4) or a cutting gap (5) in a workpiece (1), or in order to position the auxiliary guide over the workpiece surface.

7. Wire erosion machine with open wire guidance having an upper wire guide head (10), a lower wire guide head (20) and a threading device (30) for threading wire electrodes (2) according to one of the preceding claims, **characterized in that** the guide channel (32) of the auxiliary guide (31) guides the wire electrode (2) or its wire electrode tip (3) in a direction perpendicular to the workpiece surface.

8. Wire erosion machine with open wire guidance having an upper wire guide head (10), a lower wire guide head (20) and a threading device (30) for threading wire electrodes (2) according to one of the preceding claims, **characterized in that** the auxiliary guide (31) has an external diameter of 0.15 to 1 mm, preferably 0.3 to 0.8 mm, particularly preferably 0.5 mm.

9. Wire erosion machine with open wire guidance having an upper wire guide head (10), a lower wire guide head (20) and a threading device (30) for threading wire electrodes (2) according to one of the preceding claims, **characterized in that** the auxiliary guide (31) has a length of 2 to 100 mm, preferably 10 to 50 mm, preferably 5 to 15 mm, particularly preferably 10 or 40 mm.

10. Wire erosion machine with open wire guidance having an upper wire guide head (10), a lower wire guide head (20) and a threading device (30) for threading wire electrodes (2) according to one of the preceding claims, **characterized in that** the cross section of the guide channel (32) of the auxiliary guide (31) is at least partly V-shaped, U-shaped or circular.

11. Wire erosion machine with open wire guidance having an upper wire guide head (10), a lower wire guide head (20) and a threading device (30) for threading wire electrodes (2) according to one of the preceding claims, **characterized in that** the external cross section of the auxiliary guide (31) is at least partly cylindrical.

12. Wire erosion machine with open wire guidance having an upper wire guide head (10), a lower wire guide head (20) and a threading device (30) for threading wire electrodes (2) according to one of the preceding claims, **characterized in that** the guide channel (32) has a constant cross section.

13. Wire erosion machine with open wire guidance having an upper wire guide head (10), a lower wire guide head (20) and a threading device (30) for threading wire electrodes (2) according to one of the preceding claims, **characterized in that** the auxiliary guide (31) is provided with a funnel-shaped inlet piece for the guide channel (32).

## Revendications

1. Machine d'érosion à fil présentant un guide-fil ouvert doté d'une tête supérieure (10) de guidage de fil et d'une tête inférieure (20) de guidage de fil ainsi que d'un dispositif d'enfilage (30) qui permet d'enfiler des électrodes (2) en fil depuis la tête supérieure de guidage (10) de la machine d'érosion par fil jusque dans la tête inférieure (20) de guidage de fil de la machine d'érodage par fil en passant par l'espace de travail de la machine d'érodage par fil,
l'électrode en fil (2) sortant de la tête supérieure (10) de guidage de fil obliquement par rapport à l'amenée de courant (13) du fait de l'agencement du guide-fil supérieur (11),
**caractérisée en ce que**
le dispositif d'enfilage (30) possède un guide auxiliaire (31) qui peut être placé entre la tête supérieure et la tête inférieure (10, 20) de guidage de fil, **en ce que** le guide auxiliaire (31) présente un canal de guidage (32) en forme de rainure ouverte pour le guidage de l'électrode (2) en fil ou de la pointe (3) d'électrode en fil qui sortent obliquement de la tête supérieure (10) de guidage de fil et qu'il faut enfiler.

2. Machine d'érosion à fil présentant un guide-fil ouvert doté d'une tête supérieure (10) de guidage de fil et d'une tête inférieure (20) de guidage de fil ainsi que d'un dispositif d'enfilage (30) qui permet d'enfiler des électrodes (2) en fil selon la revendication 1, **caractérisée en ce que** le canal de guidage (32) du guide auxiliaire (31) est réalisé en une pièce.

3. Machine d'érosion à fil présentant un guide-fil ouvert doté d'une tête supérieure (10) de guidage de fil et d'une tête inférieure (20) de guidage de fil ainsi que d'un dispositif d'enfilage (30) qui permet d'enfiler des électrodes (2) en fil selon les revendications 1 ou 2, **caractérisée en ce que** le guide auxiliaire (31) présente une longueur telle qu'il s'étend jusqu'avant ou dans la tête inférieure (20) de guidage de fil.

4. Machine d'érosion à fil présentant un guide-fil ouvert doté d'une tête supérieure (10) de guidage de fil et d'une tête inférieure (20) de guidage de fil ainsi que d'un dispositif d'enfilage (30) qui permet d'enfiler des électrodes (2) en fil selon les revendications 1 ou 2, **caractérisée en ce que** le guide auxiliaire (31) présente une longueur plus courte que la distance de travail entre la tête supérieure et la tête inférieure (10, 20) de guidage de fil pour s'étendre jusqu'à la surface d'une pièce (1) à travailler qui est de préférence préparée avec un alésage de démarrage (4).

5. Machine d'érosion à fil présentant un guide-fil ouvert doté d'une tête supérieure (10) de guidage de fil et d'une tête inférieure (20) de guidage de fil ainsi que d'un dispositif d'enfilage (30) qui permet d'enfiler des électrodes (2) en fil selon les revendications 1 ou 2, **caractérisée en ce que** le guide auxiliaire (31) présente une longueur qui permet de guider l'électrode (2) en fil ou sa pointe (3) d'électrode en fil depuis la sortie de la tête supérieure (10) de guidage de fil jusqu'à la surface d'une pièce (1) de préférence préparée avec un alésage de démarrage (4).

6. Machine d'érosion à fil présentant un guide-fil ouvert doté d'une tête supérieure (10) de guidage de fil et d'une tête inférieure (20) de guidage de fil ainsi que d'un dispositif d'enfilage (30) qui permet d'enfiler des électrodes (2) en fil selon l'une des revendications précédentes, **caractérisée en ce que** le guide auxiliaire (31) peut être déplacé et de préférence incliné depuis une position de repos située à l'extérieur de l'espace de travail jusque dans l'espace de travail entre la tête supérieure et la tête inférieure (10, 20) de guidage de fil, le guide auxiliaire (31) pouvant de façon particulièrement préférable être également déplacé en alignement sur la direction de guidage de fil pour ainsi pouvoir abaisser le guide auxiliaire (31) dans un alésage de démarrage (4) ou un interstice de découpe (5) d'une pièce (1) ou pour positionner le guide auxiliaire au-dessus de la surface de la pièce.

7. Machine d'érosion à fil présentant un guide-fil ouvert doté d'une tête supérieure (10) de guidage de fil et d'une tête inférieure (20) de guidage de fil ainsi que d'un dispositif d'enfilage (30) qui permet d'enfiler des électrodes (2) en fil selon l'une des revendications précédentes, **caractérisée en ce que** le canal de guidage (32) du guide auxiliaire (31) guide l'électrode (2) en fil ou sa pointe (3) d'électrode en fil dans une direction perpendiculaire à la surface de la pièce.

8. Machine d'érosion à fil présentant un guide-fil ouvert doté d'une tête supérieure (10) de guidage de fil et d'une tête inférieure (20) de guidage de fil ainsi que d'un dispositif d'enfilage (30) qui permet d'enfiler des électrodes (2) en fil selon l'une des revendications précédentes, **caractérisée en ce que** le guide auxiliaire (31) présente un diamètre extérieur de 0,15 à 1 mm, de préférence de 0,3 à 0, 8 mm et de façon particulièrement préférable de 0,5 mm.

9. Machine d'érosion à fil présentant un guide-fil ouvert doté d'une tête supérieure (10) de guidage de fil et d'une tête inférieure (20) de guidage de fil ainsi que d'un dispositif d'enfilage (30) qui permet d'enfiler des électrodes (2) en fil selon l'une des revendications précédentes, **caractérisée en ce que** le guide auxiliaire (31) présente une longueur de 2 à 100 mm, de préférence de 10 à 50 mm, de préférence de 5 à 15 mm et de façon particulièrement préférable de 10 ou de 40 mm.

10. Machine d'érosion à fil présentant un guide-fil ouvert doté d'une tête supérieure (10) de guidage de fil et d'une tête inférieure (20) de guidage de fil ainsi que d'un dispositif d'enfilage (30) qui permet d'enfiler des électrodes (2) en fil selon l'une des revendications précédentes, **caractérisée en ce que** la section transversale de canal de guidage (32) du guide auxiliaire (31) est au moins en partie en forme de V, en forme de U ou en forme de cercle.

11. Machine d'érosion à fil présentant un guide-fil ouvert doté d'une tête supérieure (10) de guidage de fil et d'une tête inférieure (20) de guidage de fil ainsi que d'un dispositif d'enfilage (30) qui permet d'enfiler des électrodes (2) en fil selon l'une des revendications précédentes, **caractérisée en ce que** la section transversale extérieure du guide auxiliaire (31) est au moins en partie cylindrique.

12. Machine d'érosion à fil présentant un guide-fil ouvert doté d'une tête supérieure (10) de guidage de fil et d'une tête inférieure (20) de guidage de fil ainsi que d'un dispositif d'enfilage (30) qui permet d'enfiler des électrodes (2) en fil selon l'une des revendications précédentes, **caractérisée en ce que** le canal de guidage (32) présente une section transversale constante.

13. Machine d'érosion à fil présentant un guide-fil ouvert doté d'une tête supérieure (10) de guidage de fil et d'une tête inférieure (20) de guidage de fil ainsi que d'un dispositif d'enfilage (30) qui permet d'enfiler des électrodes (2) en fil selon l'une des revendications précédentes, **caractérisée en ce que** le guide auxiliaire (31) est doté d'une pièce d'entrée en forme d'entonnoir pour le canal de guidage (32).
